# EUROPEAN PATENT SPECIFICATION

(11) **EP 3 285 367 B1**
(45) Date of publication and mention of the grant of the patent: **19.06.2019**
(21) Application number: 17184704.9
(22) Date of filing: 03.08.2017
(51) Int. Cl.: H02K 3/12, B21C 1/00, B21C 1/18, B21C 3/04, H02K 15/00

(54) **WINDING ASSEMBLY FOR ROTARY ELECTRIC MACHINE AND METHOD OF MANUFACTURING**
WICKLUNGSANORDNUNG FÜR ELEKTRISCHE DREHMASCHINE UND VERFAHREN ZUR HERSTELLUNG
ENSEMBLE D'ENROULEMENT POUR MACHINE TOURNANTE ÉLECTRIQUE ET PROCÉDÉ DE FABRICATION

(30) Priority: 04.08.2016 US 201615228306
(43) Date of publication of application: 21.02.2018
(73) Proprietor: Otis Elevator Company, Farmington, Connecticut 06032 (US)
(72) Inventor: Piech, Zbigniew, Farmington, CT 06032 (US); Watson, Benjamin J., Farmington, CT 06032 (US)
(74) Representative: Schmitt-Nilson Schraud Waibel Wohlfrom Patentanwälte Partnerschaft mbB

(56) References cited:
- EP-A1- 2 362 526
- BE-A- 514 194
- DE-A1-102014 222 376
- JP-A- 2001 178 051
- US-A- 3 407 472
- US-A1- 2012 092 117

## Description

The embodiments herein relate to winding assemblies and methods of manufacturing such assemblies.

High power, low voltage motors, such as those used in battery powered applications, require motors designed with a low number of turns per coil.

According to document DE 20 2014 222 376 a copper winding assembly for a rotary electric machine includes a stator. Also included is a plurality of radially extending teeth defining a plurality of slots therebetween. Further included is a winding segment disposed within each of the slots, the winding segment having a constant cross-sectional area along an entire length thereof and a cross-sectional geometric shape that varies at each turn along a height of the teeth.

Document EP 2 362 526 discloses a winding arrangement having segments with a rectangular cross-sectional geometric shape.

Document JP 2001 178 051 discloses a winding arrangement having segments with a trapezoidal cross-sectional geometric shape.

The present invention relates to a method of manufacturing motor windings in accordance with the appended claim 1.

Advantageous embodiments of the invention are defined in the dependent claims 2 to 5.

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a sectional view of a motor winding according to an embodiment of the disclosure;
FIG. 2 is a sectional view of the motor winding according to another embodiment of the disclosure; and
FIG. 3 is a schematic illustration of a method of manufacturing the motor winding.

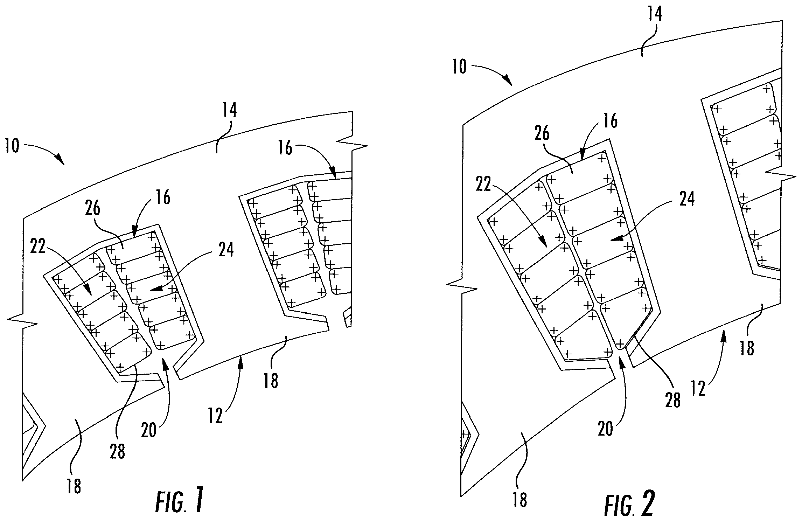

Referring to FIG. 1, a portion of a rotary electric machine, such as a motor 10, is illustrated. The embodiments described herein may benefit numerous types of rotary electric machines. In some embodiments, the machine is a battery driven motor, with a low number of turns per coil, high power and low voltage. This type of motor has challenges with conventional manufacturing methods which result in high noise and/or low efficiency. One problem driving this issue is that most motor slots are inherently trapezoidal and most conductors are either circular or rectangular, for example. Therefore, the result is a low motor slot fill where much of the slot area is unused.

The motor 10 includes a stator assembly 12 made up of a stator 14 and a plurality of windings generally designated with numeral 16. The stator 14 includes a plurality of teeth 18 and a plurality of slots 20 defined between respectively adjacent teeth 18. In the illustrated embodiment, each of the plurality of slots 20 includes a pair of winding segments 22, 24. The winding segments 22, 24 are positioned side-by-side within the slot 20 and each represents an electrical conductor. Various contemplated electrically conductive materials may be used to form wires of the winding segments 22, 24. For example, copper and aluminum may be employed, but it is to be appreciated that these examples are not limiting.

The winding segments 22, 24 each include an electrically insulating layer which serves to insulate the wires of the segments 22, 24 from one another while minimizing the non-electrically conducting fill within the cross-section of each slot 20. For copper wire, the conductors are enameled. In the case of aluminum wire, the conductors may be enameled or oxidized. Optionally, the aluminum wire may be coated in copper to improve its conductivity, which is done prior to enameling.

The winding segments 22, 24 are sized such that when positioned within the slot 20, completely all or substantially all of the cross-section of the slot 20 (i.e., in the plane shown in FIGS. 1 and 2) is filled. By increasing the extent to which the slots 20 are filled with the winding segments 22, 24, a closed slot assembly is achieved, which increases motor efficiency due to motor resistance and winding losses being reduced. Additionally, such a construction provides the option of using aluminum conductors to reduce cost. Generally, aluminum wire is not practical for motor winding because of its inherently lower conductivity. Greater conductor area, however, can offset this and allow the use of such a conductor material.

Typical stator slot and winding cross-sectional shapes are not conducive to obtaining a high slot fill. This is due to the slot being trapezoidal, for example, while windings are circular or rectangular, thereby resulting in much of the slot are being unused. The embodiments of the winding segments 22, 24 described herein are of constant cross-sectional area along an entire length thereof, but the cross-sectional geometric shape varies to better conform to the shape of the slot 20. The term "constant" used herein refers to the winding segments 22, 24 having a constant cross-sectional area such as within manufacturing tolerances as known to those of skill in the arts of at least metal extrusion and/or pultrusion processes, for example.

Various cross-sectional shapes of the winding segments 22, 24 may be employed depending upon the particular application. In the illustrated embodiments, a rectangular cross-section (FIG. 1) and a trapezoidal cross-section (FIG. 2) are utilized. It is further contemplated that a combination of geometric shape segments may be employed. For example, a combination of rectangular and trapezoidal segments may be employed. Furthermore, any combination of rectangular, trapezoidal, circular and/or square segments may be utilized in some embodiments.

Regardless of the specific geometry, the cross-sectional area remains constant, but the shape changes to accommodate the contour of the surfaces that define the slot 20 at different locations. As shown, in the illustrated trapezoidal slots, a wider winding segment is desirable proximate a first end 26 of the slot 20, while a narrower winding segment is desirable proximate a second end 28 of the slot 20. In particular, winding segment varies in portions along a length thereof. Each portion of the winding with a common cross-sectional geometric shape corresponds to a full turn of the winding around each tooth 18. Therefore, the shape is the same at the same height on each side of the tooth 18. As the winding is wound around the tooth 18, the shape varies when going up or down (i.e., toward or away from the ends 26, 28 of the slot 20). The varying shape of the winding segments 22, 24 accommodate the slot geometry to obtain a high fill with little or no wasted space within the slot 20. In some embodiments, the winding undergoes a number of full turns around the tooth ranging from 3 to 10. In such embodiments, the winding contains 3 to 10 winding segment portions with different geometric shapes, but with constant cross-sectional area.

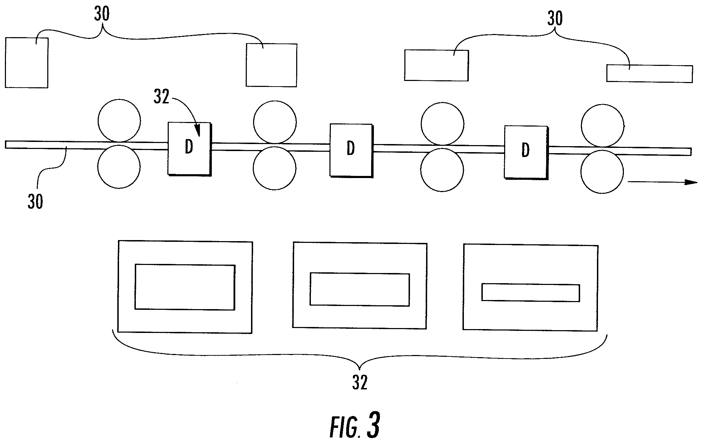

Referring now to FIG. 3, a method of forming the winding segments 22, 24 is schematically represented. As shown, a wire 30 is drawn through a series of dies 32 to create the variable cross-sectional shape while maintaining the constant cross-sectional area that was described above. The length of each turn of the winding segments 22, 24 is controlled by selective spacing of the dies 32. A constant cross-sectional area is ensured by maintaining a constant linear speed along the length of the wire. After a sufficient length of the wire 30 is drawn through, the line is reversed to eject the wire to preserve the varied shape. To facilitate reversal, the dies 32 have a constant width and decreasing height as measured in a plane orthogonal to the direction of travel of the wire being drawn through the dies, with the width of the wire 30 being less than the width of the dies 32. Once the wire 30 is ejected from the dies 32, it is insulated in the manner described in detail above.

The winding segments 22, 24 are then wound onto the teeth 18 in a typical manner to dispose them in the slots 20. Prior to winding the final half turn, the winding segment is simultaneously energized and tensioned. Energizing the coil heats the metal to make it softer. When the winding segment is tensioned, the conductor pulls tight against the tooth 18. This improves the heat transfer between the coil and the tooth and improves the slot fill. Optionally, if self-bonding insulation is employed, this operation can solidify the tooth/coil assembly.

Advantageously, higher motor slot fill is achieved. This translates into better motor efficiency, motor cost reduction, or a combination of these two advantages.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A method of manufacturing motor windings comprising:
drawing a wire (30) through a plurality of dies (32) having a particular spacing so that a length of each turn of the windings is controlled, the plurality of dies (32) varying in at least two dimensions to form the wire to be of a constant cross-sectional area along an entire length thereof and a varying cross-sectional geometric shape;
**characterized by**
reversing a direction of travel of the wire (30) to eject the wire (30) from the dies (32),
wherein the wire (30) is drawn through the plurality of dies (32) at a constant linear speed along a length of the wire (30).

2. The method of claim 1, wherein the plurality of dies (32) have a constant width and a decreasing height as measured in a plane orthogonal to the direction of travel of the wire being drawn through the dies (32).

3. The method of any of claims 1-2, further comprising insulating the wire (30) by enameling the wire that is formed of copper.

4. The method of any of claims 1-3, further comprising insulating the wire (30) by oxidizing the wire that is formed of aluminum.

5. The method of any of claims 1-4, further comprising:
winding the motor winding around a plurality of teeth (18) of a stator (14) to dispose the motor winding within a slot (20) of the stator (14) until a final half turn of the motor winding is required; and
simultaneously energizing the motor winding and tensioning the motor winding prior to winding the final half turn of the motor winding.

## Patentansprüche

1. Verfahren zur Herstellung von Motorwicklungen, umfassend:
Ziehen eines Drahtes (30) durch eine Vielzahl von Plättchen (32), die eine bestimmte Beabstandung aufweisen, sodass eine Länge jeder Wende der Wicklungen gesteuert wird, wobei die Vielzahl von Plättchen (32) in zumindest zwei Abmessungen variiert, um den Draht derart zu formen, dass er einen konstanten Querschnittsbereich entlang einer gesamten Länge davon und eine geometrische Form mit variierendem Querschnitt aufweist;
**gekennzeichnet durch**
Umkehren einer Bewegungsrichtung des Drahtes (30), um den Draht (30) aus den Plättchen (32) auszugeben,
wobei der Draht (30) bei einer konstanten linearen Geschwindigkeit entlang einer Länge des Drahtes (30) durch die Vielzahl von Plättchen (32) gezogen wird.

2. Verfahren nach Anspruch 1, wobei die Vielzahl von Plättchen (32) eine konstante Breite und eine abnehmende Höhe aufweist, wie in einer Ebene orthogonal zu der Bewegungsrichtung des Drahtes, der durch die Plättchen (32) gezogen wird, gemessen.

3. Verfahren nach einem der Ansprüche 1-2, ferner umfassend das Isolieren des Drahtes (30) durch Emaillieren des Drahtes, der aus Kupfer gebildet ist.

4. Verfahren nach einem der Ansprüche 1-3, ferner umfassend das Isolieren des Drahtes (30) durch Oxidieren des Drahtes, der aus Aluminium gebildet ist.

5. Verfahren nach einem der Ansprüche 1-4, ferner umfassend:
Wickeln der Motorwicklung um eine Vielzahl von Zähnen (18) eines Stators (14), um die Motorwicklung innerhalb eines
Schlitzes (20) des Stators (14) anzuordnen, bis eine finale Halbwende der Motorwicklung erforderlich ist; und
simultanes Erregen der Motorwicklung und Spannen der Motorwicklung vor dem wickeln der finalen Halbwende der Motorwicklung.

## Revendications

1. Procédé de fabrication d'enroulements de moteur comprenant :
le tirage d'un fil (30) à travers une pluralité de matrices (32) ayant un espacement particulier de sorte qu'une longueur de chaque tour des enroulements est commandée, la pluralité de matrices (32) variant dans au moins deux dimensions pour former le fil afin qu'il ait une zone de section transversale constante le long d'une longueur totale de celui-ci et une forme géométrique de section transversale variable ;
**caractérisé par**
l'inversion d'une direction de déplacement du fil (30) pour éjecter le fil (30) des matrices (32),
dans lequel le fil (30) est tiré à travers la pluralité de matrices (32) à une vitesse linéaire constante le long d'une longueur du fil (30).

2. Procédé selon la revendication 1, dans lequel la pluralité de matrices (32) ont une largeur constante et une haute décroissante telles que mesurées dans un plan orthogonal à la direction de déplacement du fil tiré à travers les matrices (32).

3. Procédé selon l'une quelconque des revendications 1 à 2, comprenant en outre l'isolation du fil (30) par l'émaillage du fil qui est constitué de cuivre.

4. Procédé selon l'une quelconque des revendications 1 à 3, comprenant en outre l'isolation du fil (30) par l'oxydation du fil qui est constitué d'aluminium.

5. Procédé selon l'une quelconque des revendications 1 à 4, comprenant en outre :
l'enroulement de l'enroulement de moteur autour d'une pluralité de dents (18) d'un stator (14) pour disposer l'enroulement de moteur à l'intérieur d'une fente (20) du stator (14) jusqu'à ce qu'un demi-tour final de l'enroulement de moteur soit requis ; et
l'alimentation de l'enroulement de moteur et la mise sous tension de l'enroulement de moteur simultanées avant l'enroulement du demi-tour final de l'enroulement de moteur.
